(19)

**Europäisches Patentamt**
**European Patent Office**
**Office européen des brevets**

(11) **EP 4 327 278 B1**

(12) **EUROPEAN PATENT SPECIFICATION**

(45) Date of publication and mention
of the grant of the patent:
**22.07.2026 Bulletin 2026/30**

(21) Application number: **22723657.7**

(22) Date of filing: **20.04.2022**

(51) International Patent Classification (IPC):
***G06T 7/00*** *(2017.01)*

(52) Cooperative Patent Classification (CPC):
**G06T 7/0016;** G06T 2207/10032;
G06T 2207/20036; G06T 2207/20076;
G06T 2207/30188

(86) International application number:
**PCT/EP2022/060409**

(87) International publication number:
**WO 2022/223611 (27.10.2022 Gazette 2022/43)**

(54) **METHOD OF IDENTIFYING A SOIL-BORNE PATHOGEN ON A TARGET CROP IN AN AGRICULTURAL PARCEL**

VERFAHREN ZUR IDENTIFIZIERUNG EINES BODENBÜRTIGEN PATHOGENS AUF EINER ZIELKULTUR AUF EINER LANDWIRTSCHAFTLICHEN PARZELLE

PROCÉDÉ D'IDENTIFICATION D'UN PATHOGÈNE TERRICOLE SUR UNE CULTURE CIBLE DANS UNE PARCELLE AGRICOLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.04.2021 EP 21169924**

(43) Date of publication of application:
**28.02.2024 Bulletin 2024/09**

(73) Proprietor: **Syngenta Crop Protection AG
4058 Basel (CH)**

(72) Inventors:
• **SNAPIR, Boris
1024 Ecublens (CH)**
• **JOALLAND, Samuel
1377 Oulens sous Echallens (CH)**

(74) Representative: **HGF
HGF BV
Benoordenhoutseweg 46
2596 BC The Hague (NL)**

(56) References cited:
• **TIAN YANQIN ET AL: "Machine learning-based crop recognition from aerial remote sensing imagery", FRONTIERS OF EARTH SCIENCE, HIGHER EDUCATION PRESS, HEIDELBERG, vol. 15, no. 1, 1 March 2021 (2021-03-01), pages 54 - 69, XP037428538, ISSN: 2095-0195, [retrieved on 20210329], DOI: 10.1007/S11707-020-0861-X**
• **FLORIAN MOURET ET AL: "Unsupervised crop anomaly detection at the parcel-level using optical and SAR images: application to wheat and rapeseed crops", ARXIV.ORG, CORNELL UNIVERSITY LIBRARY, 201 OLIN LIBRARY CORNELL UNIVERSITY ITHACA, NY 14853, 17 April 2020 (2020-04-17), XP081647603**

## Description

Technical Field

The present invention relates to a method of identifying a soil-borne pathogen on a target crop in an agricultural parcel, in particular, to a remote sensing method for mapping and managing nematode pressure in soybean. More particular, the present invention relates to a method for remote sensing assessment of damage in soybean fields due to nematodes, and more generally to a method for crop health monitoring in agricultural fields.

Background Art

Identification and monitoring of soil-borne pathogens such as diseases or pests is critical to ensure high productivity in agricultural fields. Those pathogens can generally survive several years in the soil and reproduce fast in the presence of a host crop. Nematodes are plant-parasitic soil-borne pathogens which can infect more than 200 different plant species in 23 families. They live in the soil and feed on plant roots. Soybean crop is the host of approximately 100 nematode species among which soybean cyst nematodes (Heterodera glycines), root-lesion nematode (Pratylenchus brachyurus), root-knot nematode (Meloidogyne incognita/javanica), reniform nematode (Rotylenchus reniformis) and spiral nematode (Helicotylenchus spp.) are the most common ones. Life cycle of nematodes varies slightly between species. However, they all feed on the root system.

Nematodes occur in patches in the field and have a low mobility. Crop damage occurs as nematodes penetrate and feed on soybean roots, reducing the plant's ability to access water and nutrients, and can result in decreased productivity. Above-ground symptoms of infection are not unique to nematode infection, and can be confused with nutrient deficiency, stress from drought, herbicide injury or other pests and diseases. This is why methods to assess nematode-related stress are limited. Traditional methods rely on human scouting with expert visual assessment of the typical patchy shape of nematode stress. Such assessments rely on the trained eye of the assessor which can be biased, inaccurate, non-repeatable, and does not scale to large geographical areas. Ultimately, nematode presence can also be confirmed by local soil sampling and in-laboratory procedures to identify the different nematode species and count the number of individuals. Again, such techniques do not scale well to large geographical areas, are costly and may also fail to capture the local spatial variability in nematode populations. Counter measures to reduce the impacts of nematodes include agricultural practices, such as crop rotation, use of tolerant cultivars and use of nematicides. In particular, crop rotation involves alternating between soybean and other non-host crops or less nematode-sensitive plants, for example but not limited to corn, in order to decrease the population of nematodes in the soil.

Yanqin Tian et al., "Machine learning-based crop recognition from aerial remote sensing imagery", Frontiers of Earth Science, Higher Education Press, Heidelberg, vol. 15, no. 1, 1 March 2021, pages 54 - 69, ISSN: 2095-0195, DOI: 10.1007/S11707-020-0861-X discloses pixel-based evaluation of crop state of soybeans and other crop. Vegetation indices are assessed over time.

Florian Mouret et al., "Unsupervised crop anomaly detection at the parcel-level using optical and SAR images: application to wheat and rapeseed crops", ARXIV.ORG, Cornell University Library, Ithaca, NY 14853, 17 April 2020, discloses parcel-level crop anomaly detection from SAR and optical images on rapeseed and wheat using optical vegetation indices. Regional statistics and various features are calculated.

Therefore, there is a need for an improved method for mapping soil-borne pathogens such as nematode stress in crops that is reliable and effective particularly over large geographical areas. Such a method would allow better soil-borne pathogens management, ultimately resulting in higher crop production.

Disclosure of the Invention

As discussed above there is a need to provide a reliable and effective as well as computer aided assessment of within-field soil-borne pathogens on a target crop in an agricultural parcel, in particular, nematode stress on soybean crops.

According to the invention this need is settled by a method of identifying a soil-borne pathogen on a target crop in an agricultural parcel as it is defined by the features of independent claim 1. Preferred embodiments are subject of the dependent claims.

In one aspect, the invention relates to a method of identifying a soil-borne pathogen on a target crop in an agricultural parcel. The method comprises the steps of: obtaining a first digital image of the agricultural parcel in a first crop cycle, wherein in the first crop cycle the target crop is grown in the agricultural parcel; obtaining a reference digital image of the agricultural parcel in a reference crop cycle, wherein in the reference crop cycle a reference crop is grown in the agricultural parcel and wherein the reference crop is different from the target crop; computing a first vegetation index related to a first pixel in the first digital image, determining a first signed distance between the first pixel and surrounding pixels thereof based on the first vegetation index, and detecting a first anomaly of the first pixel if the first signed distance is below a predefined threshold; defining a reference anomaly for a reference pixel of the reference digital image; and identifying the soil-borne pathogen of the first pixel in case the first anomaly does not match the reference anomaly.

The method according to the present invention may be realised as a computer program that processes the digital images of the crops and detects the soil-borne pathogen on the target crop, with comparably less human intervention. In other words, the method relates to a computer implemented invention, where the steps of the method described above and below can be implemented in the computer program. The computer program can be stored in a non-volatile memory. The computer can utilise its operating system and hardware components to execute the computer program in order to identify a soil-borne pathogen on a target crop in an agricultural parcel. The term "computer" can relate to a system including several computers or computational units in a distributed manner as well as other electronic device such as a camera and a drone for obtaining the digital images.

According to another aspect of, the present invention relates to a system of identifying a soil-borne pathogen on a target crop in an agricultural parcel, comprising an image capture apparatus configured to obtain a first digital image of the agricultural parcel in a first crop cycle and a reference digital image of the agricultural parcel in a reference crop cycle. In the first crop cycle, the target crop is grown in the agricultural parcel. In the reference crop cycle, a reference crop is grown in the agricultural parcel. The reference crop is different from the target crop. The system further comprises a computational unit configured to compute a first vegetation index related to a first pixel in the first digital image, to determine a first signed distance between the first pixel and surrounding pixels thereof based on the first vegetation index, and to detect a first anomaly of the first pixel if the first signed distance is below a predefined threshold. The computational unit is further configured to define a reference anomaly for a reference pixel of the reference digital image, and to identify the soil-borne pathogen of the first pixel in case the first anomaly does not match the reference anomaly.

The term "soil-borne pathogen" relates to a pest or disease that usually lives and reproduces in the soil and/or in the roots. It can cause damage on the root system and direct or indirect damage on the plant canopy. The soil-borne pathogen typically includes fungi, bacteria and nematodes. A crop in an agricultural parcel attacked or stressed by a soil-borne pathogen, in particular by nematodes, shows symptoms such as stunted growth, yellowing of the leaves and wilting. Such damage on the crop will result in a yield decrease. Those symptoms on the canopy can be recognised by human eyes or an image processing means using a computer.

The term "digital image" in connection with the agricultural parcel relates to a digital image or picture that is a visual photographic representation of a crop in the agricultural parcel. The digital image comprises picture elements, also known as pixels. Each pixel is provided with finite and discrete quantities of numeric representation for its intensity. Depending on the need, the digital image in the represent invention may have a spatial resolution of 50 meters. In this case one pixel of the digital image represents an 50x50 meters of an area of the crop. For more sophisticated analysis the spatial resolution can be finer, i.e. 20 meters or less. The digital image can be for example acquired by an airborne platform such as drone, balloon, plane, or spaceborne platform such as satellite. The digital images can be clipped using the boundary of an agricultural parcel of interest, thereby selecting the usable ones, e.g. potential cloud-free images.

The term "target crop" relates to a crop grown in the agricultural parcel that needs to be assessed. In other words, the target crop is the candidate crop that the presence of the soil-borne pathogen thereon is to be identified using the method of the present invention. In an exemplary embodiment, the target crop is soybean.

The term "reference crop" relates to a crop that grows in the reference crop cycle. In order to compare the digital image of the target crop with that of the reference crop, the reference crop is a different crop from the target crop. The reference crop cycle may be at a more recent time than the target crop cycle. For example, for assessing nematode pressure on the target crop in a field 12 months ago, a reference crop cycle from 6 months ago can be used, provided that it exists. Alternatively, the reference crop cycle may be grown also before the target crop cycle. In an exemplary embodiment, the reference crop is a non-host crop that is different from the target crop.

The term "vegetation index" is one of the indicators for observation and analysis of the surface of the earth, more specifically the earth vegetation. In connection with a pixel in the digital image, the vegetation index is indicative of vegetation vigour of the agricultural parcel represented by that pixel. The vegetation index of the vegetation can be derived from the digital image of the agricultural parcel. It relates to the vegetation properties of the agricultural parcel. The vegetation index can be used to indicate the vegetation health of the agricultural parcel including the soil and crop growing thereon. Typically, the Normalised Difference Vegetation Index, NDVI, is used as a benchmark but other indices such as Green Normalised Difference Vegetation Index, GNDVI, or single spectral bands can be also used.

The term "signed distance" quantifies by how much the vegetation index of a given pixel deviates from the average vegetation index of surrounding pixels, wherein the vegetation index preferably the NDVI. The signed distance can be computed as defined by equation (1), where x is the vegetation index value of the central pixel to assess, $\mu$ and $\sigma$ are the average and standard deviation of the surrounding pixels.

$$d_{\mu,\sigma} = \frac{x-\mu}{\sigma} \qquad (1)$$

The "surrounding pixels" relate to the neighbouring pixels that are not directly adjacent or next to the given pixel but have a predefined distance to the given pixel. For instance, the predefined distance can be at least 70 meters and at most 310 meters in respect of a spatial distance in the agricultural parcel, i.e., the neighbouring pixels have a distance from 70 to 310 meters to the given pixel. From a geometric perspective, the surrounding pixels form a donut-shaped window. Depending on the type of the target crop, the predefined distance can also be 80 to 310 meters, or 100 to 250 meters.

The term "anomaly" in connection with the pixel of the digital image relates to a status of the pixel that possibly has a soil-borne pathogen. For example, a pixel of the digital image under nematode stress is a pixel which is detected as anomaly during the first crop cycle and across none of the reference crop cycle. A pixel under stress which is not related to nematode is a pixel which is detected as anomaly during the first crop cycle of interest and during the reference crop cycle.

The present invention utilises a distinguishing image pattern to provide a reliable assessment of within-field soil-borne pathogen stress like nematode stress on a target crop such as a soybean crop. The method according to the present invention is based on remote sensing aerial or satellite imagery, making it scalable to large geographical areas. In particular, it relies on a time series of images which captures the crop rotation between the target crop such as soybean and the reference crop such as non-host plants to decouple above-ground soil-borne pathogen stress like nematode stress from other non-nematode stresses. The underlying decoupling strategy is that nematode stress is visible only during the soybean cycles, at the same specific locations in the field and does not appear during the non-host plant cycles, while other stresses are visible during both soybean and non-host crops cycles. The same decoupling strategy would apply to other crop-specific pathogens, such as Fusarium virguliforme in soybean (Sudden Death Syndrome) or Plasmodiophora brassicae in canola (Clubroot).

Preferably, the reference anomaly may be defined by the steps of: computing a reference vegetation index indicative of vegetation vigour of the agricultural parcel for a reference pixel in the reference digital image, determining a reference signed distance between the reference pixel and surrounding pixels thereof, and detecting the reference anomaly of the reference pixel if the reference signed distance is below the predefined threshold. Alternatively, the reference anomaly can be determined using conventional approach, for instance relying on human intervention. Further, the reference anomaly may already be classified and stored in a historical database. In comparison, the present invention utilises the computational approach to detect the reference anomaly, which can further improve the reliability of the detection. The detection of the reference anomaly using the above step can further improve the reliability and effectiveness since it does not rely on human eyes. However, if the reference anomalies have been already classified using the conventional approach such as human eyes, they can be used without re-classifying according to the above steps.

Preferably, the method includes further steps of using a digital image of an additional crop cycle for refining the result of the identification of the soil-borne pathogen. The use of additional crop includes steps of: obtaining a second digital image of the agricultural parcel in a second crop cycle, wherein in the second crop cycle the target crop is grown in the agricultural parcel, computing a second vegetation index indicative of vegetation vigour of the agricultural parcel for a second pixel in the second digital image, determining a second signed distance between the second pixel and surrounding pixels thereof, and detecting a second anomaly of the second pixel if the second signed distance is below the predefined threshold. Like this, the result of the soil-borne pathogen identification can be further improved in terms of reliability, for instance increasing the correctness of the soil-borne pathogen detection of the target crop. Using images from additional crop cycles of the target crop, i.e. the second crop cycle, allows further classifying nematode stress into two categories: (i) non-recurrent nematode stress if the nematode stress is only detected on the first pixel but not on the second pixel, (ii) recurrent nematode stress if the nematode stress is detected on both the first and the second pixels. Recurrent nematode stress can also be considered as a more reliable classification as it complies with the fact that nematodes can generally survive several years in the soil.

Preferably, the first signed distance is determined by comparing the first vegetation index with an average and standard deviation of vegetation indices of the surrounding pixels of the first pixel. As described above, the first signed distance can be computed using the equation (1) or directly apply a threshold on the vegetation index, for instance isolating the pixels with an abnormally low vegetation index value can be also used.

Preferably, the reference signed distance and the second signed distance can be computed similarly as above. That is the reference signed distance may be determined by comparing the reference vegetation index with an average and standard deviation of vegetation indices of the surrounding pixels of the reference pixel. The second signed distance may be determined by comparing the second vegetation index with an average and standard deviation of vegetation indices of the surrounding pixels of the second pixel. Analogue to the first signed distance, the reference signed distance and the second signed distance can be computed using the equation (1) or directly apply a respective threshold on the respective vegetation index, for instance isolating the pixels with an abnormally low vegetation index value can be also used.

Preferably, a second crop cycle, timely before or after the first crop cycle, can be used to help identification of the soil-borne pathogen of the target crop. The digital images of multiple second crop cycles may be stored in a database which can be retrieved if needed.

Preferably, the method further comprises the steps of: creating a first, a reference and a second signed distance map including signed distances of a plurality of the first, the reference and the second pixels, respectively.

Preferably, the first, the reference and the second signed distance map comprise a plurality of the reference and the second crop cycles, respectively. For instance, the average reference signed distance map is computed for each reference crop cycle using mathematical operators. For example, the signed distances of these multiple cycles can be merged by the minimum operator in order to highlight the most severe past stresses. The signed distance map is also an image that visually represents the abnormality or abnormal pixels. In particular, the signed distance map is a digital image with pixels, wherein pixel values close to zero represent normal pixels, pixel values above zero correspond to abnormally high vegetation index, pixel values below zero correspond to abnormally low vegetation index. The further advantages using the average signed distance map is to attenuate the impact of occurrence of low signed distance on single images. Low signed distance on a single image is likely due to noise such as an image with undetected small clouds or cloud shadows. In comparison, nematode damage is expected to result in vegetation stress which is persistent over multiple images.

Alternative to the use of the signed distance map, any other method for isolating pixels with an abnormally low vegetation index value can be also used. Such alternative methods include for example, directly isolating anomalous pixels with a vegetation index value less than a fixed threshold.

Preferably, the method further comprises the steps of: computing a target stress state for each of the plurality of the target crops using a mean operator, respectively, and updating the target signed distance map by applying a minimum operator to the target stress state of each of the plurality of target crops. The step with the minimum operator is not mandatory. Since there can still be several images within the target cycle, so the step with the mean operator may be required.

Preferably, the method further comprises the steps of: computing a reference stress state for each of the plurality of the reference crops using a mean operator, respectively, and updating the reference signed distance map by applying a minimum operator to the reference stress state of each of the plurality of reference crops.

Preferably, the method further comprises the steps of: computing a second stress state for each of the plurality of the second crops using a mean operator, respectively, and updating the second signed distance map by applying a minimum operator to the second stress state of each of the plurality of the second crops.

As explained above, the low values in the signed distance maps correspond to abnormally low vegetation index, which is a hole in the vegetation. Therefore, using the minimum operator across multiple cycles may keep the most severe occurrence of stress, while using the mean operator for a given crop cycle is an attempt to attenuate false stress detections due to noise. The "noise" here corresponds to anything which would lead to a low signed distance only on a single image, for example an image with a small cloud which was not filtered out. In comparison, it can be expected that nematode stress is persistent over multiple images.

Preferably, the method further comprises the step of: identifying the soil-borne pathogen of the first pixel in case the first anomaly does not exist in the reference signed distance map.

Preferably, the method further comprises the step of: identifying the first anomaly being a recurrent soil-borne pathogen in case the first anomaly exists in the second signed distance map, or identifying the first anomaly being a non-recurrent soil-borne pathogen in case the first anomaly does not exist in the second signed distance map. In particular, if an anomaly occurs only during the first crop cycle and not during the second crop cycle, then the anomaly may be classified as a non-recurrent nematode.

In other words, a more specific identification of soil-borne pathogen can be described using the comparison of the first signed distance map with the reference and the second signed distance map. In particular, the target crop probably has the soil-borne pathogen if the first anomaly does not exist in the reference signed distance map. Further, if the first anomaly exists in the second signed distance map, it means that the target crop probably has a recurrent soil-borne pathogen; or the first anomaly does not exist in the second signed distance map, it means that the target crop probably has non-recurrent soil-borne pathogen. If the first anomaly exists in the reference signed distance map, it means that the target crop probably does not have the soil-borne pathogen.

Preferably, the method further comprises the step of: changing the predefined threshold for adjusting a level of the soil-borne pathogen to be identified. The different thresholds can be useful for definition of increasing levels of stress of the soil-borne pathogen.

In particular, it can be used for isolation of the pixels that are under certain value. Hence, the method may further comprise the step of: isolating the first pixel with pixels having signed distances below the predefined threshold, wherein the predefined threshold corresponds to a probability indicative of a false alarm.

Preferably, the digital images have a spatial resolution of 50 meters or less, preferably 20 meters or less. The required image resolution depends on the type of the crops and the soil-borne pathogen to be assessed.

Preferably, the first, the reference and the second vegetation index each comprises at least one of: Normalized Difference Vegetation Index, Green Normalised Difference Vegetation Index, and Near Infrared band.

The present invention provides a method to detect areas with above-ground stress due to soil-borne pathogens such as nematode stress in soybean crops for a given geographic region. For example, it allows mapping out soybean fields and identifying areas infested with nematodes. The method relies on a time series of remote sensing aerial or satellite images which captures the crop rotation between soybean and non-host plants to decouple above-ground nematode stresses from other non-nematode stresses. Non-nematode stresses may include soil compaction, nutrient deficiencies, drought stress, and other non-soybean-specific stresses. The method provides reliable maps of nematode stress in soybean, over large geographical areas. Such information is useful for better nematode management, and ultimately for improved soybean production.

Brief Description of the Drawings

The method according to the invention are described in more detail hereinbelow by way of an exemplary embodiment of the present invention and with reference to the attached drawings, in which:

Fig. 1    shows a flow diagram of the steps of the exemplary embodiment for identification of soybean areas under nematode stress,

Fig. 2    shows the exemplary embodiment that relies on a time series of multi-spectral remote sensing images which covers past cycles of soybean and the non-host plant,

Fig. 3    shows the exemplary embodiment, where the computation of the NDVI for each digital image and then the signed distance for a donut-shaped sliding window,

Fig. 4    shows the exemplary embodiment, where the donut-shaped window is used to compare the pixel value of the central pixel with the average and standard deviation of neighbouring pixels,

Fig. 5    shows the exemplary embodiment, where the first, second and reference signed distance maps are converted to first, second and reference anomaly maps respectively using a predefined threshold,

Fig. 6    shows the exemplary embodiment, where combination of signed-distance maps into one map for the current soybean cycle, one for the past soybean cycle, and one for the past non-host plant cycles, wherein the combination is done through mean and minimum operators,

Fig. 7    shows the exemplary embodiment, where the decision tree is used to determine whether the stress of a pixel during the current soybean cycle is related to nematodes or has other causes,

Fig. 8    shows the exemplary embodiment, where a combination of the anomaly maps into the output indicating areas under nematode stress with three stress intensities that are high, medium and low, and

Fig. 9    shows the exemplary embodiment, with the output of the method indicating areas under nematode stress with three stress intensities that are high, medium and low and a drone image taken during the current soybean cycle showing a nematode patch highlighted on the output map.

In the exemplary embodiments, the soil-borne pathogen is the nematode and the target crop is the soybean. This is only for better understanding and should not limit the scope of claims that are directed at the generic application of the method for identifying a soil-borne pathogen on a target crop.

Description of Embodiments

In the following description certain terms are used for reasons of convenience and are not intended to limit the invention. The terms "right", "left", "up", "down", "under" and "above" refer to directions in the figures. The terminology comprises the explicitly mentioned terms as well as their derivations and terms with a similar meaning. Also, spatially relative terms, such as "beneath", "below", "lower", "above", "upper", "proximal", "distal", and the like, may be used to describe one element's or feature's relationship to another element or feature as illustrated in the figures. These spatially relative terms are intended to encompass different positions and orientations of the devices in use or operation in addition to the position and orientation shown in the figures. For example, if a device in the figures is turned over, elements described as "below" or "beneath" other elements or features would then be "above" or "over" the other elements or features. Thus, the exemplary term "below" can encompass both positions and orientations of above and below. The devices may be otherwise oriented (rotated 90 degrees or at other orientations), and the spatially relative descriptors used herein interpreted accordingly. Likewise, descriptions of movement along and around various axes include various special device positions and orientations.

To avoid repetition in the figures and the descriptions of the various aspects and illustrative embodiments, it should be understood that many features are common to many aspects and embodiments. Omission of an aspect from a description or figure does not imply that the aspect is missing from embodiments that incorporate that aspect. Instead, the aspect may have been omitted for clarity and to avoid prolix description. In this context, the following applies to the rest of this description: If, in order to clarify the drawings, a figure contains reference signs which are not explained in the directly associated part of the description, then it is referred to previous or following description sections. Further, for reason of lucidity, if in a drawing not all features of a part are provided with reference signs it is referred to other drawings showing the same part. Like numbers in two or more figures represent the same or similar elements.

Hereinafter is a detailed description of the exemplary embodiment of the present invention, i.e. a method for within-field, reliable, and scalable assessment of the impact of nematodes on soybean crops, using remote sensing aerial or satellite imagery.

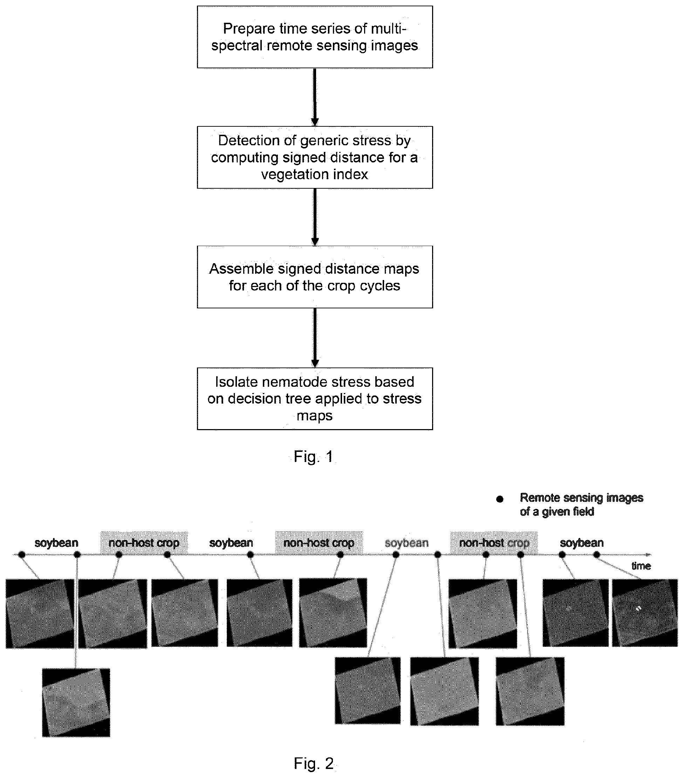

Fig. 1 shows a flowchart about some main and optional steps of the exemplary embodiment of the present invention, where the steps of assembling signed distance map and isolating nematode stress are preferred but entirely optional.

In the first step, the time series of multi-spectral remote sensing images will be obtained. These digital images are the visual photographic representations of the crops in the agricultural parcel. In the second step, the generic stress can be detected by computing signed distance for a vegetation index. In the third step, the signed distance maps can be assembled for each of the crop cycles. In the fourth step, the nematode stress can be isolated based on a decision tree applied to stress map.

In particular, the first step may comprise preparing the time series of multi-spectral remote sensing images for the field to be analysed. The images comprise spectral bands which allow computing a vegetation index correlated to vegetation health. The Normalized Difference Vegetation Index, NDVI, is used here as a preferred index, but other indices, such as the Green Normalized Vegetation Index, GNDVI, or single spectral bands can be also used, as long as they highlight vegetation vigour. The NDVI is defined as the normalised difference between the Near Infrared band and the Red band using the following equation (2):

$$NDVI = \frac{NIR-Red}{NIR+Red} \qquad (2)$$

Fig. 2 shows the time series images covering multiple crop cycles. Here, to assess the nematode stress on the latest soybean cycle, the time series covers three past cycles of soybean and three past cycles of the non-host plant used in rotation with soybean. Some past cycles may not have any cloud-free image available. This is acceptable as long as there is at least one past cycle for soybean and the non-host plant with cloud-free images that provide a sufficient visual representation of the crops. Finally, all the images can be cropped to the boundaries of the field to be analysed and resample on a common pixel grid to allow pixel comparison across images. This can be considered as an optional pre-processing step, for instance, the digital image in Fig. 2 shows only the pixels within the parcel. The pixels outside the parcel are masked out or blackened, which is so-called cropped to the boundaries of the field. Then, with some satellite sources, or if different satellites are used, the images might be sampled on different pixel grids. Since the given pixels across multiple images should be analysed, the images should all be sampled on the same pixel grid. Nowadays, satellite images tend to be provided in a format which allows multi-temporal comparison.

In this embodiment, there are three soybean crop cycles as the second crop cycles in the past time, and three non-host crop cycles as reference crop cycles in the past time. These crop cycles are used for determination of possible nematodes in the target crop that is the current soybean as shown in the very right place of the time scale. In other embodiment, the second crop cycle is at a more recent time than the target crop cycle, and the reference crop cycle can be also at a more recent time than the target crop cycle.

The second step as shown in Fig. 1 may comprise identifying pixels of the field which are under stress compared to neighbouring pixels. First the NDVI is computed for each image as a proxy to assess general vegetation health.

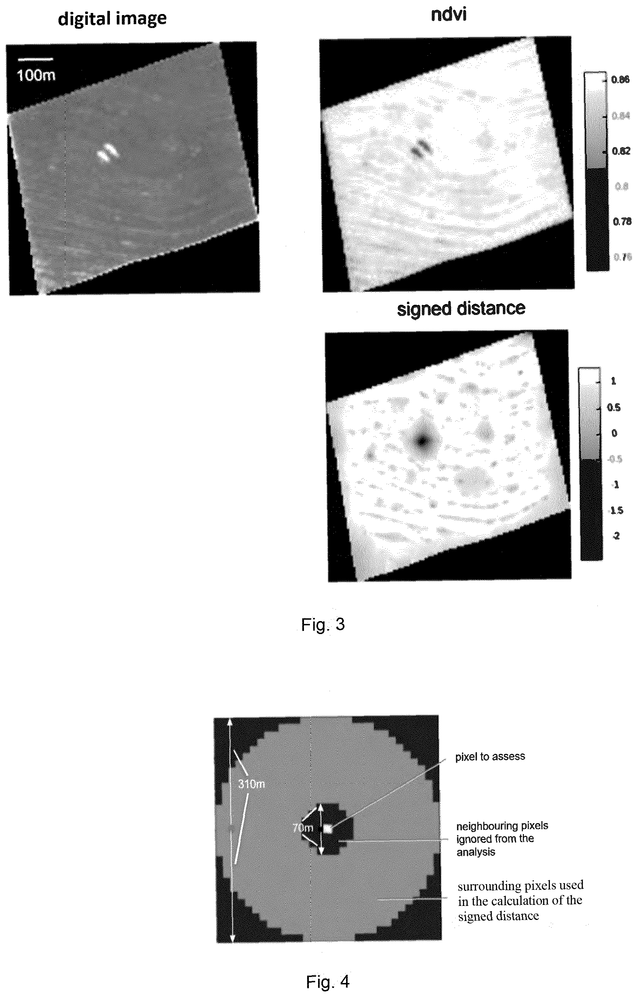

Fig. 3 illustrates a sliding window being then applied to the NDVI image to compute the signed distance as defined by equation (1). The signed distance can quantify by how much the NDVI of a given pixel deviates from the average NDVI of neighbouring pixels. This quantity can be normalized by the standard deviation of neighbouring pixels in order to handle images with crops at different maturity levels. The window used to compute the signed distance may have a donut shape which allows ignoring pixels which are close to the given central pixel and may also be under stress. The size of the window should not be smaller than the typical size of expected nematode stress and should not be larger than other large scale field heterogeneities.

In particular, the NDVI image of the target crop including first vegetation index can be created using the digital photo of the target crop taken (digital image). Based on the NDVI image, the signed distance map can be computed.

Fig. 4 shows the exemplary donut-shaped window having an outer radius of 310 meters and an inner radius of 70 meters. The output of the second step is a collection of signed distance maps that is one for each image of the time series. The pixel to be assessed is in the middle of the donut. The neighbouring pixels adjacent or directly next to this pixel are to be ignored from the analysis. The neighbouring pixels surrounding the pixel to be assessed have a distance of 70 to 310 meters to the pixel to be assessed and will be used for computing the vegetation index of the pixel.

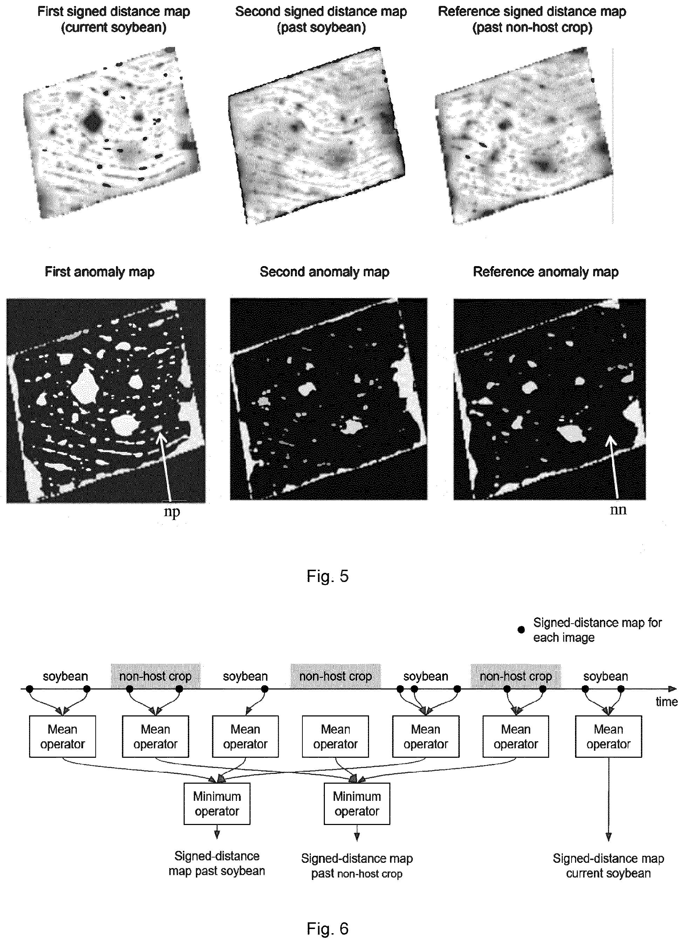

Fig. 5 shows the first signed distance map (current soybean), the second signed distance map (past soybean) and the reference signed distance map (past non-host crop) in grayscale (top images) as well as their respective anomaly maps with anomalous pixels highlighted in grey (bottom images), i.e. after conversion using a predefined threshold. As explained above, the low values in the signed distance maps correspond to abnormally low vegetation index, which are holes in the vegetation. Accordingly, the three signed distance maps show the anomalous pixels highlighted in black which represents the holes and the three anomaly maps show the anomalous pixels highlighted in (light) grey. An exemplary nematode patch (np) on the first anomaly map is highlighted by means of the white arrow. On the reference anomaly map, the same area comprises a non-nematode area (nn). In other words, the first anomaly map does not match the reference anomaly map in this exemplary area.

The third step as shown in Fig. 1 may comprise combining the multiple signed-distance maps per crop cycle into three maps: one for the current soybean cycle, one for the past soybean cycle, and one for the past non-host plant cycles.

As shown in Fig. 6, firstly the average signed-distance map is computed for each crop cycle, then past cycles for a given crop are aggregated together with a pixelwise minimum operator. The mean operators capture the overall stress state of a given crop cycle and can handle variable numbers of input images. The minimum operators isolate the worst stress event of all past cycles. In this case the non-host crop corresponds to the reference crop in the generic definition of the method according to the present invention. Further, the past soybean corresponds to the second crop and the current soybean corresponds to the target crop in the generic definition of the method according to the present invention.

The last step as shown in Fig. 1 may comprise combining the three signed-distance maps through a decision tree to determine whether the stress of a given pixel during the current soybean cycle is related to nematodes or has other causes, as shown in Fig. 6. On each signed-distance map, a pixel is considered under stress if its signed-distance value is below a given threshold. In other words, a pixel is under stress if it corresponds to a negative NDVI anomaly. Different threshold values can be used to define increasing levels of stress. For example, from equation (1), a threshold value of - 2 isolates pixels which are less than -2σ. Assuming that non-stressed NDVI pixels follow a Gaussian statistical distribution, such a threshold corresponds to a probability of false alarm of 2.3%. The equation (3) gives the Probability of False Alarm (PFA) as a function of the threshold value t, the average μ and the standard deviation σ. The function erf is the error function.

$$PFA = \frac{1}{2} - \frac{1}{2} erf\left(\frac{t-\mu}{\sigma\sqrt{2}}\right) \qquad (3)$$

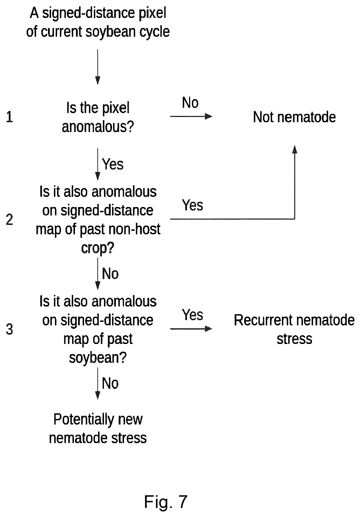

Fig. 7 shows the decision tree of the anomaly using the signed distance pixel of the target crop cycle that is the current soybean cycle. In particular, if an anomaly occurs during the first crop cycle and also during the second crop cycle, then the anomaly is classified as recurrent nematode. A pixel under stress which is not related to nematode is a pixel which is detected as an anomaly during the first crop cycle of interest and during the reference crop cycle. The first anomaly being a recurrent soil-borne pathogen means that the target crop has a recurrent soil-borne pathogen. The first anomaly being a non-recurrent soil-borne pathogen means: either (i) the target crop has a potential new soil-borne pathogen when the second target cycle is timely before the first crop cycle as shown in Fig. 7, or (ii) the target crop has a non-recurrent soil-borne pathogen when the second target cycle is at more recent time as the first crop cycle.

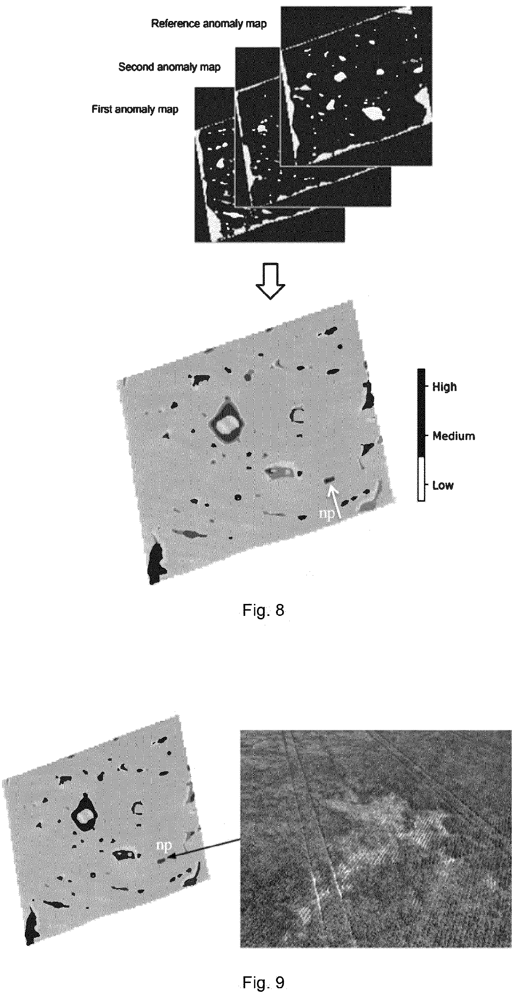

Fig. 8 shows an example of a combination of a first anomaly map, a second anomaly map and a reference anomaly map using the decision tree according to Fig. 7 and the output map of the method indicating areas under nematode stress. Three intensities of nematode stress are highlighted (low, medium, high) on the output map. The area under non-nematode stress is not shown but is a valuable by-product of the inventive method. Non-nematode stress may correspond to soil compaction, water stress, waterlogging, nutrient deficiency, and other non-soybean-specific stresses. Here, the three severity levels of stress "low", "medium", and "high" correspond to three threshold values $t$ = -1.04 (PFA of 15%), $t$ = -1.44 (PFA of 7.5%), and $t$ = -2.33 (PFA of 1%), respectively. The white arrow points to the exemplary nematode patch (np) on the output map.

In general, there are many advantages using the method according to the present invention, for instance it can increase farm profitability which means higher yield and reduced inputs.

Furthermore, the method can identify locations within the field that are infested with nematodes. The nematode infestation maps with GPS coordinates of infested areas can be used for different purposes, e.g., (i) for direct targeted nematicide application, where treated seed or in-furrow application of nematicide will be applied only on the infested areas; (ii) for targeted soil sampling to confirm the diagnostic and accurately evaluate the nematode pressure in the infested areas; (iii) for optimisation of crop rotation, in particular, in the fields where high nematode pressure is expected, a specific crop rotation could be selected for the entire field or part of it to reduce the nematode pressure; (iv) for assessing the evolution of nematode pressure overtime in the field.

In addition, the method can be used to compare the nematode pressure between different fields. For example, the method can identify the most infested fields to optimize and prioritize farm management. The evolution of the nematode pressure overtime in the different fields can also be assessed to evaluate the efficacy of the countermeasures applied.

Fig. 9 finally depicts, on the right hand side, an aerial drone image taken during the current soybean cycle showing the nematode patch (np) which is highlighted by means of the arrow on the output map on the left hand side. On the output map, areas under nematode stress are again indicated with three stress intensities that are high, medium and low.

This description and the accompanying drawings that illustrate aspects and embodiments of the present invention should not be taken as limiting the claims defining the protected invention. In other words, while the invention has been illustrated and described in detail using examples such as nematode and soybean crop as well as standard signed distance map in the drawings and foregoing description, such illustration and description are to be considered illustrative or exemplary and not restrictive. Various mechanical, compositional, structural, electrical, and operational changes may be made within the scope of the appended claims. In some instances, well-known circuits, structures and techniques have not been shown in detail in order not to obscure the invention. Thus, it will be understood that changes and modifications may be made by those of ordinary skill within the scope of the following claims. In particular, the present invention covers further embodiments with any combination of features from different embodiments described above and below. For example, it is possible to operate the invention in an embodiment wherein no signed distance maps are used, as defined in claim 1 of the present invention.

Furthermore, in the claims the word "comprising" does not exclude other elements or steps, and the indefinite article "a" or "an" does not exclude a plurality. A single unit or step may fulfil the functions of several features recited in the claims. The mere fact that certain measures are recited in mutually different dependent claims does not indicate that a combination of these measures cannot be used to advantage. The terms "essentially", "about", "approximately" and the like in connection with an attribute or a value particularly also define exactly the attribute or exactly the value, respectively. The term "about" in the context of a given numerate value or range refers to a value or range that is, e.g., within 20%, within 10%, within 5%, or within 2% of the given value or range. Components described as coupled or connected may be electrically or mechanically directly coupled, or they may be indirectly coupled via one or more intermediate components. Any reference signs in the claims should not be construed as limiting the scope.

A computer program may be stored/distributed on a suitable medium, such as an optical storage medium or a solid-state medium supplied together with or as part of other hardware, but may also be distributed in other forms, such as via the Internet or other wired or wireless telecommunication systems. In particular, e.g., a computer program can be a computer program product stored on a computer readable medium which computer program product can have computer executable program code adapted to be executed to implement a specific method such as the method according to the invention. Furthermore, a computer program can also be a data structure product or a signal for embodying a specific method such as the method according to the invention.

**Claims**

1. A computer-implemented method of identifying a soil-borne pathogen on a target crop in an agricultural parcel, comprising the steps of:

    obtaining a first digital image of the agricultural parcel in a first crop cycle, wherein in the first crop cycle the target crop is grown in the agricultural parcel;
    obtaining a reference digital image of the agricultural parcel in a reference crop cycle, wherein in the reference crop cycle a reference crop is grown in the agricultural parcel and wherein the reference crop is different from the target crop;
    computing a first vegetation index related to a first pixel in the first digital image,
    **characterised by**
    determining a first signed distance between the first pixel and surrounding pixels thereof based on the first vegetation index, and detecting a first anomaly of the first pixel if the first signed distance is below a predefined threshold;
    defining a reference anomaly for a reference pixel of the reference digital image; and
    identifying the soil-borne pathogen of the first pixel in case the first anomaly does not match the reference anomaly.

2. The method according to claim 1, wherein defining the reference anomaly comprises the steps of:
computing a reference vegetation index relating to a reference pixel in the reference digital image, determining a reference signed distance between the reference pixel and surrounding pixels thereof, and detecting the reference anomaly of the reference pixel if the reference signed distance is below the predefined threshold.

3. The method according to any one of the preceding claims, further comprising:

    obtaining a second digital image of the agricultural parcel in a second crop cycle, wherein in the second crop cycle the target crop is grown in the agricultural parcel, and
    computing a second vegetation index indicative of vegetation vigour of the agricultural parcel for a second pixel in the second digital image, determining a second signed distance between the second pixel and surrounding pixels thereof, and detecting a second anomaly of the second pixel if the second signed distance is below the predefined threshold.

4. The method according to any one of preceding claims, further comprising:
determining the first signed distance by comparing the first vegetation index with an average and standard deviation of vegetation indices of the surrounding pixels of the first pixel.

5. The method according to claim 3 or 4, further comprising:

determining the reference signed distance by comparing the reference vegetation index with an average and standard deviation of vegetation indices of the surrounding pixels of the reference pixel, and/or
determining the second signed distance by comparing the second vegetation index with an average and standard deviation of vegetation indices of the surrounding pixels of the second pixel.

6. The method according to any one of claims 3 to 5, further comprising:
creating a first, a reference and a second signed distance map including signed distances of a plurality of the first, the reference and the second pixels, respectively.

7. The method according to claim 6,

wherein the first, the reference and the second signed distance map comprise a plurality of the first, the reference and the second crop cycles, respectively, and
wherein the plurality of the first, the reference and the second crop cycles alternate with each other.

8. The method according to claim 7, further comprising:

computing a target stress state for each of the plurality of the reference crops using a mean operator, respectively,
computing a reference stress state for each of the plurality of the reference crops using a mean operator, respectively,
updating the reference signed distance map by applying a minimum operator to the reference stress state of each of the plurality of reference crops; and/or
computing a second stress state for each of the plurality of the second crops using a mean operator, respectively,
updating the second signed distance map by applying a minimum operator to the second stress state of each of the plurality of the second crops.

9. The method according to any of claims 6 to 8, further comprising:
identifying the soil-borne pathogen of the first pixel of the target crop in case the first anomaly does not exist in the reference signed distance map.

10. The method according to claim 9, further comprising:

identifying the first anomaly being a recurrent soil-borne pathogen in case the first anomaly exists in the second signed distance map, or identifying the first anomaly being a non-recurrent soil-borne pathogen in case the first anomaly does not exist in the second signed distance map.

11. The method according to any one of the preceding claims, further comprising:
changing the predefined threshold for adjusting a level of the soil-borne pathogen to be identified.

12. The method according to any one of the preceding claims, further comprising:
isolating the first pixel of the target crop with pixels having signed distances below the predefined threshold, wherein the predefined threshold corresponds to a probability indicative of a false alarm.

13. The method according to any one of the preceding claims, wherein the soil borne pathogen is a nematode stress, wherein the target crop is soybean, and wherein the reference crop is non-host crop.

14. A non-volatile memory comprising a computer program, said program comprising instructions which, when the program is executed by a computer, cause the computer to carry out the method according to any one of the preceding claims.

15. A system for identifying a soil-borne pathogen on a target crop in an agricultural parcel, comprising:

an image capture apparatus adapted to obtain a first digital image of the agricultural parcel in a first crop cycle and a reference digital image of the agricultural parcel in a reference crop cycle, wherein in the first crop cycle the target crop is grown in the agricultural parcel, wherein in the reference crop cycle a reference crop is grown in the agricultural parcel and wherein the reference crop is different from the target crop;

a computational unit adapted to compute a first vegetation index related to a first pixel in the first digital image,

**characterised by**

the computational unit being further adapted to determine a first signed distance between the first pixel and surrounding pixels thereof based on the first vegetation index, and to detect a first anomaly of the first pixel if the first signed distance is below a predefined threshold; wherein the computational unit is further adapted to define a reference anomaly for a reference pixel of the reference digital image, and to identify the soil-borne pathogen of the first pixel in case the first anomaly does not match the reference anomaly.

## Patentansprüche

1. Computerimplementiertes Verfahren zur Identifizierung eines bodenbürtigen Pathogens auf einer Zielpflanze in einer landwirtschaftlichen Parzelle, umfassend die folgenden Schritte:

Erhalten eines ersten digitalen Bildes der landwirtschaftlichen Parzelle in einem ersten Pflanzenzyklus, wobei in dem ersten Pflanzenzyklus die Zielpflanze in der landwirtschaftlichen Parzelle angebaut wird;
Erhalten eines digitalen Referenzbildes der landwirtschaftlichen Parzelle in einem Referenzpflanzenzyklus, wobei in dem Referenzpflanzenzyklus eine Referenzpflanze in der landwirtschaftlichen Parzelle angebaut wird und wobei sich die Referenzpflanze von der Zielpflanze unterscheidet;
Berechnen eines ersten Vegetationsindex in Bezug auf ein erstes Pixel in dem ersten digitalen Bild, **gekennzeichnet durch** Bestimmen eines ersten vorzeichenbehafteten Abstands zwischen dem ersten Pixel und umgebenden Pixeln davon basierend auf dem ersten Vegetationsindex und Erkennen einer ersten Anomalie des ersten Pixels, falls der erste vorzeichenbehaftete Abstand unter einem vordefinierten Schwellenwert liegt;
Definieren einer Referenzanomalie für ein Referenzpixel des digitalen Referenzbilds; und
Identifizieren des bodenbürtigen Pathogens des ersten Pixels, falls die erste Anomalie nicht mit der Referenzanomalie übereinstimmt.

2. Verfahren nach Anspruch 1, wobei das Definieren der Referenzanomalie die folgenden Schritte umfasst:
Berechnen eines Referenzvegetationsindex in Bezug auf ein Referenzpixel in dem digitalen Referenzbild, Bestimmen eines vorzeichenbehafteten Referenzabstands zwischen dem Referenzpixel und umgebenden Pixeln davon und Erkennen der Referenzanomalie des Referenzpixels, falls der vorzeichenbehafteten Referenzabstand unter dem vordefinierten Schwellenwert liegt.

3. Verfahren nach einem der vorhergehenden Ansprüche, ferner umfassend:

Erhalten eines zweiten digitalen Bildes der landwirtschaftlichen Parzelle in einem zweiten Pflanzenzyklus, wobei in dem zweiten Pflanzenzyklus die Zielpflanze in der landwirtschaftlichen Parzelle angebaut wird, und
Berechnen eines zweiten Vegetationsindex, der die Vegetationsvitalität der landwirtschaftlichen Parzelle für ein zweites Pixel in dem zweiten digitalen Bild angibt, Bestimmen eines zweiten vorzeichenbehafteten Abstands zwischen dem zweiten Pixel und umgebenden Pixeln davon und Erkennen einer zweiten Anomalie des zweiten Pixels, falls der zweite vorzeichenbehaftete Abstand unter dem vordefinierten Schwellenwert liegt.

4. Verfahren nach einem der vorhergehenden Ansprüche, ferner umfassend:
Bestimmen des ersten vorzeichenbehafteten Abstands durch Vergleichen des ersten Vegetationsindex mit einem Durchschnittswert und einer Standardabweichung von Vegetationsindizes der umgebenden Pixel des ersten Pixels.

5. Verfahren nach Anspruch 3 oder 4, ferner umfassend:

Bestimmen des vorzeichenbehafteten Referenzabstands durch Vergleichen des Referenzvegetationsindex mit einem Durchschnittswert und einer Standardabweichung von Vegetationsindizes der umgebenden Pixel des Referenzpixels und/oder
Bestimmen des zweiten vorzeichenbehafteten Abstands durch Vergleichen des zweiten Vegetationsindex mit einem Durchschnittswert und einer Standardabweichung von Vegetationsindizes der umgebenden Pixel des zweiten Pixels.

6. Verfahren nach einem der Ansprüche 3 bis 5, ferner umfassend:
Erstellen einer Karte vorzeichenbehafteter erster, Referenz- und zweiter Abstände, die vorzeichenbehaftete Abstände einer Mehrzahl der ersten, der Referenz- bzw. der zweiten Pixel beinhaltet.

7. Verfahren nach Anspruch 6,

wobei die Karte vorzeichenbehafteter erster, Referenz- und zweiter Abstände eine Mehrzahl der ersten, der Referenz- bzw. der zweiten Pflanzenzyklen umfasst und

wobei sich die Mehrzahl der ersten, der Referenz- und der zweiten Pflanzenzyklen abwechselt.

8. Verfahren nach Anspruch 7, ferner umfassend:

Berechnen eines Zielstresszustands für jede der Mehrzahl von Referenzpflanzen jeweils unter Verwendung eines Mittelwertoperators, Berechnen eines Referenzstresszustands für jede der Mehrzahl von Referenzpflanzen jeweils unter Verwendung eines Mittelwertoperators, Aktualisieren der Karte vorzeichenbehafteter Referenzabstände durch Anwenden eines Minimum-Operators auf den Referenzstresszustand jeder der Mehrzahl von Referenzpflanzen; und/oder Berechnen eines zweiten Stresszustands jeder der Mehrzahl der zweiten Pflanzen jeweils unter Verwendung eines Mittelwertoperators, Aktualisieren der Karte zweiter vorzeichenbehafteter Abstände durch Anwenden eines Minimum-Operators auf den zweiten Stresszustand jeder der Mehrzahl der zweiten Pflanzen.

9. Verfahren nach einem der Ansprüche 6 bis 8, ferner umfassend:
Identifizieren des bodenbürtigen Pathogens des ersten Pixels der Zielpflanze, falls die erste Anomalie in der Karte vorzeichenbehafteter Referenzabstände nicht vorhanden ist.

10. Verfahren nach Anspruch 9, ferner umfassend:

Identifizieren, dass es sich bei der ersten Anomalie um ein wiederkehrendes bodenbürtiges Pathogen handelt, falls die erste Anomalie in der Karte zweiter vorzeichenbehafteter Abstände vorhanden ist, oder Identifizieren, dass es sich bei der ersten Anomalie um ein nicht wiederkehrendes bodengetragenes Pathogen handelt, falls die erste Anomalie in der Karte zweiter vorzeichenbehafteter Abstände nicht vorhanden ist.

11. Verfahren nach einem der vorhergehenden Ansprüche, ferner umfassend:
Ändern des vordefinierten Schwellenwerts zum Anpassen einer Konzentration des zu identifizierenden bodenbürtigen Pathogens.

12. Verfahren nach einem der vorhergehenden Ansprüche, ferner umfassend:
Isolieren des ersten Pixels der Zielpflanze mit Pixeln mit vorzeichenbehafteten Abständen unter dem vordefinierten Schwellenwert, wobei der vordefinierte Schwellenwert einer Wahrscheinlichkeit entspricht, die einen falschen Alarm angibt.

13. Verfahren nach einem der vorhergehenden Ansprüche, wobei es sich bei dem bodenbürtigen Pathogen um einen Nematoden-Stress handelt, wobei es sich bei der Zielpflanze um Sojabohnen handelt und wobei es sich bei der Referenzpflanze um eine Nicht-Wirtspflanze handelt.

14. Nichtflüchtiger Speicher, umfassend ein Computerprogramm, wobei das Programm Anweisungen umfasst, die, wenn das Programm von einem Computer ausgeführt wird, den Computer veranlassen, das Verfahren nach einem der vorhergehenden Ansprüche durchzuführen.

15. System zum Identifizieren eines bodenbürtigen Pathogens auf einer Zielpflanze in einer landwirtschaftlichen Parzelle, umfassend:

eine Bildaufnahmeeinrichtung, die dazu ausgelegt ist, ein erstes digitales Bild der landwirtschaftlichen Parzelle in einem ersten Pflanzenzyklus und ein digitales Referenzbild der landwirtschaftlichen Parzelle in einem Referenzpflanzenzyklus zu erhalten, wobei in dem ersten Pflanzenzyklus die Zielpflanze in der landwirtschaftlichen Parzelle angebaut wird, wobei in dem Referenzpflanzenzyklus eine Referenzpflanze in der landwirtschaftlichen Parzelle angebaut wird und wobei sich die Referenzpflanze von der Zielpflanze unterscheidet; eine Recheneinheit, die dazu ausgelegt ist, einen ersten Vegetationsindex in Bezug auf ein erstes Pixel in dem ersten digitalen Bild zu berechnen, **dadurch gekennzeichnet, dass** die Recheneinheit ferner dazu ausgelegt ist, einen ersten vorzeichenbehafteten Abstand zwischen dem ersten Pixel und umgebenden Pixeln davon basierend auf dem ersten Vegetationsindex zu bestimmen und eine erste Anomalie des ersten Pixels zu erkennen, falls der erste vorzeichenbehaftete Abstand unter einem vordefinierten Schwellenwert liegt; wobei die Recheneinheit ferner dazu ausgelegt ist, eine Referenzanomalie für ein Referenzpixel des digitalen Referenzbilds zu definieren und das bodenbürtige Pathogen des ersten Pixels zu identifizieren, falls die erste Anomalie nicht mit der Referenzanomalie übereinstimmt.

**Revendications**

1. Procédé, mis en œuvre par ordinateur, d'identification d'un agent pathogène du sol sur une culture cible dans une parcelle agricole, comprenant les étapes suivantes :

obtention d'une première image numérique de la parcelle agricole lors d'un premier cycle de culture, la culture cible étant cultivée dans la parcelle agricole lors du premier cycle de culture ;

obtention d'une image numérique de référence de la parcelle agricole lors d'un cycle de culture de référence, une culture de référence étant cultivée dans la parcelle agricole lors du cycle de culture de référence et la culture de référence étant différente de la culture cible ;

calcul d'un premier indice de végétation associé à un premier pixel dans la première image numérique, **caractérisé par** la détermination d'une première distance signée entre le premier pixel et des pixels l'entourant sur la base du premier indice de végétation, et la détection d'une première anomalie du premier pixel si la première distance signée est inférieure à un seuil prédéfini ;

définition d'une anomalie de référence pour un pixel de référence de l'image numérique de référence ; et

identification de l'agent pathogène du sol du premier pixel dans le cas où la première anomalie ne correspond pas à l'anomalie de référence.

2. Procédé selon la revendication 1, dans lequel la définition de l'anomalie de référence comprend les étapes suivantes :
calcul d'un indice de végétation de référence associé à un pixel de référence dans l'image numérique de référence, détermination d'une distance signée de référence entre le pixel de référence et des pixels l'entourant, et détection de l'anomalie de référence du pixel de référence si la distance signée de référence est inférieure au seuil prédéfini.

3. Procédé selon l'une quelconque des revendications précédentes, comprenant en outre :

l'obtention d'une deuxième image numérique de la parcelle agricole lors d'un deuxième cycle de culture, la culture cible étant cultivée dans la parcelle agricole lors du deuxième cycle de culture, et

le calcul d'un deuxième indice de végétation indiquant la vigueur de la végétation de la parcelle agricole pour un deuxième pixel dans la deuxième image numérique, la détermination d'une deuxième distance signée entre le deuxième pixel et des pixels l'entourant, et la détection d'une deuxième anomalie du deuxième pixel si la deuxième distance signée est inférieure au seuil prédéfini.

4. Procédé selon l'une quelconque des revendications précédentes, comprenant en outre :
la détermination de la première distance signée par comparaison du premier indice de végétation à une moyenne et un écart type d'indices de végétation des pixels entourant le premier pixel.

5. Procédé selon la revendication 3 ou 4, comprenant en outre :

la détermination de la distance signée de référence par comparaison de l'indice de végétation de référence à une moyenne et un écart-type d'indices de végétation des pixels entourant le pixel de référence, et/ou

la détermination de la deuxième distance signée par comparaison du deuxième indice de végétation à une moyenne et un écart type d'indices de végétation des pixels entourant le deuxième pixel.

6. Procédé selon l'une quelconque des revendications 3 à 5, comprenant en outre :
la création d'une première carte de distances signées, d'une carte de distances signées de référence et d'une deuxième carte de distances signées, comportant des distances signées d'une pluralité des premiers pixels, des pixels de référence et des deuxièmes pixels, respectivement.

7. Procédé selon la revendication 6,

dans lequel la première carte de distances signées, la carte de distances signées de référence et la deuxième carte de distances signées comprennent une pluralité des premiers cycles de culture, des cycles de culture de référence et des deuxièmes cycles de culture, respectivement, et

dans lequel la pluralité des premiers cycles de culture, des cycles de culture de référence et des deuxièmes cycles de culture alternent les uns avec les autres.

8. Procédé selon la revendication 7, comprenant en outre :

le calcul d'un état de stress cible respectivement pour chaque culture de la pluralité des cultures de référence au moyen d'un opérateur moyenne,

le calcul d'un état de stress de référence respectivement pour chaque culture de la pluralité des cultures de référence au moyen d'un opérateur moyenne,

l'actualisation de la carte de distances signées de référence par application d'un opérateur minimum à l'état de stress de référence de chaque culture de la pluralité de cultures de référence ; et/ou

le calcul d'un deuxième état de stress respectivement pour chaque culture de la pluralité des deuxièmes cultures au moyen d'un opérateur moyenne,

l'actualisation de la deuxième carte de distances signées par application d'un opérateur minimum au deuxième état de stress de chaque culture de la pluralité de deuxièmes cultures.

9. Procédé selon l'une quelconque des revendications 6 à 8, comprenant en outre :
l'identification de l'agent pathogène du sol du premier pixel de la culture cible dans le cas où la première anomalie n'existe pas dans la carte de distances signées de référence.

10. Procédé selon la revendication 9, comprenant en outre :

l'identification de la première anomalie comme étant un agent pathogène du sol récurrent dans le cas où la première anomalie existe dans la deuxième carte de distances signées, ou l'identification de la première anomalie comme étant un agent pathogène du sol non récurrent dans le cas où la première anomalie n'existe pas dans la deuxième carte de distances signées.

11. Procédé selon l'une quelconque des revendications précédentes, comprenant en outre :
la modification du seuil prédéfini pour ajuster un niveau de l'agent pathogène du sol à identifier.

12. Procédé selon l'une quelconque des revendications précédentes, comprenant en outre :
l'isolement du premier pixel de la culture cible avec des pixels ayant des distances signées inférieures au seuil prédéfini, le seuil prédéfini correspondant à une probabilité représentative d'une fausse alerte.

13. Procédé selon l'une quelconque des revendications précédentes, dans lequel l'agent pathogène du sol est un stress des nématodes, dans lequel la culture cible est le soja, et dans lequel la culture de référence est une culture non hôte.

14. Mémoire non volatile comprenant un programme informatique, ledit programme comprenant des instructions qui, lors de l'exécution du programme par un ordinateur, amènent l'ordinateur à réaliser le procédé selon l'une quelconque des revendications précédentes.

15. Système destiné à identifier un agent pathogène du sol sur une culture cible dans une parcelle agricole, comprenant :

un appareil de capture d'images adapté pour obtenir une première image numérique de la parcelle agricole lors d'un premier cycle de culture et une image numérique de référence de la parcelle agricole lors d'un cycle de culture de référence, la culture cible étant cultivée dans la parcelle agricole lors du premier cycle de culture, une culture de référence étant cultivée dans la parcelle agricole lors du cycle de culture de référence, et la culture de référence étant différente de la culture cible ;
une unité informatique adaptée pour calculer un premier indice de végétation associé à un premier pixel dans la première image numérique, **caractérisé en ce que** l'unité informatique est en outre adaptée pour déterminer une première distance signée entre le premier pixel et des pixels l'entourant sur la base du premier indice de végétation, et pour détecter une première anomalie du premier pixel si la première distance signée est inférieure à un seuil prédéfini ;
dans lequel l'unité informatique est en outre adaptée pour définir une anomalie de référence pour un pixel de référence de l'image numérique de référence, et pour identifier l'agent pathogène du sol du premier pixel dans le cas où la première anomalie ne correspond pas à l'anomalie de référence.

Prepare time series of multi-
spectral remote sensing images

Detection of generic stress by
computing signed distance for a
vegetation index

Assemble signed distance maps
for each of the crop cycles

Isolate nematode stress based
on decision tree applied to stress
maps

Fig. 1

● Remote sensing images
of a given field

soybean    non-host crop    soybean    non-host crop    soybean    non-host crop    soybean

time

Fig. 2

**digital image**

**ndvi**

**signed distance**

Fig. 3

pixel to assess

neighbouring pixels
ignored from the
analysis

surrounding pixels used
in the calculation of the
signed distance

Fig. 4

First signed distance map
(current soybean)

Second signed distance map
(past soybean)

Reference signed distance map
(past non-host crop)

First anomaly map

Second anomaly map

Reference anomaly map

np

nn

Fig. 5

● Signed-distance map for
each image

soybean   non-host crop   soybean   non-host crop   soybean   non-host crop   soybean
time

Mean operator   Mean operator   Mean operator   Mean operator   Mean operator   Mean operator   Mean operator

Minimum operator   Minimum operator

Signed-distance
map past soybean

Signed-distance map
past non-host crop

Signed-distance map
current soybean

Fig. 6

A signed-distance pixel
of current soybean cycle

1     Is the pixel anomalous?     **No** → Not nematode

Yes

2     Is it also anomalous on signed-distance map of past non-host crop?     **Yes**

No

3     Is it also anomalous on signed-distance map of past soybean?     **Yes** → Recurrent nematode stress

No

Potentially new nematode stress

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Machine learning-based crop recognition from aerial remote sensing imagery. **YANQIN TIAN et al.** Frontiers of Earth Science. Higher Education Press, 01 March 2021, vol. 15, 54-69

- Unsupervised crop anomaly detection at the parcel-level using optical and SAR images: application to wheat and rapeseed crops. **FLORIAN MOURET et al.** ARXIV.ORG. Cornell University Library, 17 April 2020